# EUROPÄISCHE PATENTANMELDUNG

(11) **EP 4 711 240 A1**
(43) Veröffentlichungstag der Anmeldung: **18.03.2026**
(21) Anmeldenummer: 25201305.7
(22) Anmeldetag: 10.09.2025
(51) Int. Cl.: B62D 5/04, B62D 6/00

(54) **VERFAHREN ZUM BETREIBEN EINES LENKSYSTEM-MOTORS IN EINEM MOTOR- UND EINEM GENERATORBETRIEB, LENKSYSTEM MIT LENKSYSTEM-MOTOR UND KRAFTFAHRZEUG MIT LENKSYSTEM**

(30) Priorität: 13.09.2024 BE 202405622
(71) Anmelder: thyssenkrupp Presta Aktiengesellschaft, 9492 Eschen (LI); thyssenkrupp AG, 45143 Essen (DE)
(72) Erfinder: Károly, Tamás Gergely, 9466 Sennwald (CH); Pfister, Thomas, 6858 Schwarzach (AT); Willi, Andreas, 6923 Lauterach (AT); Gyökeres, Jen, 1097 Budapest (HU)
(74) Vertreter: thyssenkrupp Intellectual Property GmbH

(57) **Zusammenfassung**

Die vorliegende Erfindung betrifft ein Verfahren zum Betreiben eines Lenksystem-Motors (1) in einem Kraftfahrzeug, wobei der Lenksystem-Motor (1) durch einen Motorbetrieb oder einen Generatorbetrieb ein Lenkverhalten einer Lenkhandhabe beeinflusst, wobei der Lenksystem-Motor (1) eine erste und ein zweite Wicklungsgruppe (11, 12) umfasst, wobei die erste Wicklungsgruppe (11) über eine erste Schaltungsanordnung mit einer zugeordneten ersten Steuereinheit (3) und die zweite Wicklungsgruppe (12) über eine zweite Schaltungsanordnung mit einer zugeordneten zweiten Steuereinheit (4) separat voneinander angesteuert werden, wobei die erste Schaltungsanordnung mit einer ersten Gleichspannungsquelle (5) und die zweite Schaltungsanordnung mit einer zweiten Gleichspannungsquelle (6) verbunden ist. Für ein von dem Lenksystem-Motor (1) bereitzustellendes Drehmoment, das einen Generatorbetrieb des Lenksystem-Motors (1) erfordert, erfolgt eine Drehmomentumverteilung zwischen der ersten und der zweiten Wicklungsgruppe (11, 12), wobei die erste Wicklungsgruppe (11) abweichend von der zweiten Wicklungsgruppe (12) angesteuert wird, und in Bezug auf die erste Wicklungsgruppe (11) ein größerer negativer Stromfluss zugelassen wird, als in Bezug auf die zweite Wicklungsgruppe (12).

Ferner betrifft die Erfindung ein Lenksystem mit einem nach diesem Verfahren betreibbaren Lenksystem-Motor (1) und ein Kraftfahrzeug mit einem solchen Lenksystem.

## Beschreibung

Die Erfindung betrifft ein Verfahren zum Betreiben eines Lenksystem-Motors in einem Kraftfahrzeug, wobei der Lenksystem-Motor mit einer Lenkhandhabe des Kraftfahrzeugs gekoppelt ist und der Lenksystem-Motor beim Betreiben des Kraftfahrzeugs durch einen Motorbetrieb oder einen Generatorbetrieb ein Lenkverhalten der Lenkhandhabe beeinflusst. Der Lenksystem-Motor umfasst eine erste Wicklungsgruppe mit drei ersten Phasen und eine zweite Wicklungsgruppe mit drei zweiten Phasen, wobei die erste Wicklungsgruppe über eine erste Schaltungsanordnung mit einer zugeordneten ersten Steuereinheit und die zweite Wicklungsgruppe über eine zweite Schaltungsanordnung mit einer zugeordneten zweiten Steuereinheit separat voneinander angesteuert werden. Die erste Schaltungsanordnung ist dabei mit einer ersten Gleichspannungsquelle verbunden, welche die für einen Motorbetrieb der ersten Wicklungsgruppe benötigte Energie bereitstellt, und die zweite Schaltungsanordnung ist mit einer zweiten Gleichspannungsquelle verbunden, welche die für einen Motorbetrieb der zweiten Wicklungsgruppe benötigte Energie bereitstellt.

Des Weiteren betrifft die Erfindung ein elektromechanisches Lenksystem, das einen Lenksystem-Motor umfasst, der mit einer Lenkhandhabe des Lenksystems gekoppelt ist, und der bei einem Betrieb des Lenksystems in einem Kraftfahrzeug ausgebildet ist, durch einen Motorbetrieb oder durch einen Generatorbetrieb ein Lenkverhalten der Lenkhandhabe zu beeinflussen. Der Lenksystem-Motor umfasst eine erste Wicklungsgruppe mit drei ersten Phasen und eine zweite Wicklungsgruppe mit drei zweiten Phasen, wobei der Lenksystem-Motor bei einem Betrieb des Lenksystems weiter derart ausgebildet ist, dass die erste Wicklungsgruppe über eine erste Schaltungsanordnung mit einer zugeordneten ersten Steuereinheit und die zweite Wicklungsgruppe über eine zweite Schaltungsanordnung mit einer zugeordneten zweiten Steuereinheit separat voneinander ansteuerbar sind.

Zudem betrifft die Erfindung ein Kraftfahrzeug mit einem elektromechanischen Lenksystem, wobei das Kraftfahrzeug zwei Geleichspannungsquellen umfasst, die jeweils über einen DC-Bus (DC: direct current; Gleichstrom) mit einer jeweiligen Wicklungsgruppe eines Lenksystem-Motors verbunden sind.

Aus dem Stand der Technik ist es bekannt, bei einem elektromechanischen Lenksystem aus Gründen der Redundanz dort, wo ein Motor zur Umsetzung eines Lenkbefehls in eine Lenkbewegung von lenkbaren Rädern eines Kraftfahrzeugs benötigt wird, zwei Motoren oder einen Motor mit zwei separat voneinander ansteuerbaren Wicklungsgruppen vorzusehen, wobei solche Motoren mit zwei ansteuerbaren Wicklungsgruppen auch unter dem Ausdruck "Dual-Motor" oder "Doppelwicklungsmotor" bekannt sind. Eine solche redundante Auslegung, insbesondere auch in Bezug auf die Schaltungsanordnung mit Steuereinheit zum Ansteuern, wird in der DE 10 2020 209 270 A1 beschrieben.

Problematisch ist beim Betrieb eines solchen Lenksystem-Motors ein Generator-Betrieb, bei dem elektrische Ströme generiert werden, weil die Gleichspannungsquellen und/oder der Anschluss an die Gleichspannungsquellen insbesondere aus Kostengründen nicht oder nicht mehr zur Aufnahme solcher generierten Ströme ausgelegt sind, und die generierten Ströme daher Schäden an Elektronikkomponenten verursachen können.

Weitere redundant ausgelegte Schaltungsanordnungen mit einer separaten Ansteuerung unterschiedlicher Wicklungsgruppen werden in den Druckschriften US 2022/0134885 A1, US 11,081,995 B2 und CN 108638983 B offenbart, wobei darin auch die vorstehend genannte Problematik thematisiert wird.

Vor diesem Hintergrund ist es eine Aufgabe der vorliegenden Erfindung, einen Betrieb eines Lenksystem-Motors in einem Kraftfahrzeug in einem Generatorbetrieb zu ermöglichen, wobei Schäden durch negative Ströme, also durch im Generatorbetrieb generierte Ströme, vermieden werden sollen.

Zur Lösung dieser Aufgabe werden ein Verfahren zum Betreiben eines Lenksystem-Motors in einem Kraftfahrzeug, ein elektromechanisches Lenksystem sowie ein Kraftfahrzeug gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines Lenksystem-Motors in einem Kraftfahrzeug vor, wobei der Lenksystem-Motor mit einer Lenkhandhabe gekoppelt ist und der Lenksystem-Motor beim Betreiben des Kraftfahrzeugs durch einen Motorbetrieb oder einen Generatorbetrieb ein Lenkverhalten der Lenkhandhabe beeinflusst. Insbesondere ist vorgesehen, dass der Lenksystem-Motor im Motorbetrieb eine von einem Fahrzeugnutzer auf die Lenkhandhabe aufgebrachte Lenkbewegung unterstützt. Weiter ist insbesondere vorgesehen, dass der Lenksystem-Motor im Generatorbetrieb ein Lenkwiderstandsdrehmoment auf die Lenkhandhabe aufbringt. Der Lenksystem-Motor umfasst eine erste Wicklungsgruppe mit drei ersten Phasen und eine zweite Wicklungsgruppe mit drei zweiten Phasen, wobei die erste Wicklungsgruppe über eine erste Schaltungsanordnung mit einer zugeordneten ersten Steuereinheit und die zweite Wicklungsgruppe über eine zweite Schaltungsanordnung mit einer zugeordneten zweiten Steuereinheit separat voneinander angesteuert werden. Die erste Schaltungsanordnung ist dabei mit einer ersten Gleichspannungsquelle verbunden, welche die für einen Motorbetrieb der ersten Wicklungsgruppe benötigte Energie bereitstellt, und die zweite Schaltungsanordnung ist mit einer zweiten Gleichspannungsquelle verbunden, welche die für einen Motorbetrieb der zweiten Wicklungsgruppe benötigte Energie bereitstellt. Für ein von dem Lenksystem-Motor bereitzustellendes Drehmoment, das einen Generatorbetrieb des Lenksystem-Motors erfordert, erfolgt eine Drehmomentumverteilung zwischen der ersten Wicklungsgruppe und der zweiten Wicklungsgruppe, wobei die erste Wicklungsgruppe abweichend von der zweiten Wicklungsgruppe angesteuert wird, und wobei in Bezug auf die erste Wicklungsgruppe ein größerer negativer Stromfluss zugelassen wird, als in Bezug auf die zweite Wicklungsgruppe. Bei einem Generatorbetrieb des Lenksystem-Motors wird also vorteilhafterweise eine Drehmomentumverteilung in der Weise durchgeführt, dass die zweite Wicklungsgruppe möglichst keinen oder nur einen geringen negativen Stromfluss aufweist, und somit insbesondere möglichst nicht im Generatorbetrieb betrieben wird. Vorteilhafterweise wird die Problematik des negativen Stromflusses somit auf einen Teil der zwei redundanten Teile reduziert, was die Handhabung des negativen Stromflusses vereinfacht.

Weiter vorteilhaft nimmt die erste Gleichspannungsquelle in dem Generatorbetrieb des Lenksystem-Motors von der ersten Wicklungsgruppe erzeugte Energie auf, wobei insbesondere ein negativer Stromfluss zum Laden der ersten Gleichspannungsquelle verwendet wird und/oder energetisch umgewandelt wird, insbesondere in Wärmeenergie umgewandelt wird. Vorteilhafterweise kann also ein durch die erste Wicklungsgruppe generierter negativer Stromfluss zugelassen werden, weil die erste Gleichspannungsquelle insbesondere ausgebildet ist, diesen negativen Stromfluss zu handhaben, insbesondere umzuwandeln. Vorteilhafterweise werden so auch weitere Elektronikkomponenten schadlos gehalten, die ebenfalls mit der ersten Gleichspannungsquelle verbunden sind, insbesondere über einen ersten DC-Bus, über den insbesondere auch die erste Wicklungsgruppe mit der ersten Gleichspannungsquelle verbunden ist.

Besonders vorteilhaft ist des Weiteren vorgesehen, dass die erste Gleichspannungsquelle eine Fahrzeugbatterie ist. Diese Fahrzeugbatterie ist dabei vorteilhafterweise eine "klassische" Autobatterie, die keine für den Antrieb von Rädern des Kraftfahrzeugs erforderliche Energie bereitstellt. Insbesondere ist die erste Gleichspannungsquelle eine 12V-Fahrzeugbatterie (V: Volt), weiter insbesondere eine AGM-Batterie (AGM: Absorbent Glass Mat). Die Fahrzeugbatterie ist vorteilhafterweise ausgebildet, negative Ströme und Ladungen zu speichern. Vorteilhafterweise sieht das Verfahren daher weiter vor, dass ein von der ersten Wicklungsgruppe in dem Generatorbetrieb erzeugter negativer Stromfluss als überschüssige Energie des Lenksystem-Motors von der ersten Gleichspannungsquelle, insbesondere von der Fahrzeugbatterie, aufgenommen wird. Schäden entstehen durch die von der ersten Wicklungsgruppe erzeugten Ströme somit vorteilhafterweise nicht. Da insbesondere weiter vorgesehen ist, dass die erste Gleichspannungsquelle, insbesondere die erste Fahrzeugbatterie, über einen ersten DC-Bus mit der ersten Schaltungsanordnung, über welche die erste Wicklungsgruppe angesteuert wird, verbunden ist, und über diesen ersten DC-Bus insbesondere weitere elektrische Verbraucher des Kraftfahrzeugs angeschlossen sind, sind diese weiteren elektrischen Verbraucher vorteilhafterweise ebenfalls vor Schäden durch von der ersten Wicklungsgruppe generierte Ströme geschützt, also insbesondere vor einem im Generatorbetrieb der ersten Wicklungsgruppe hervorgerufenen negativen Stromfluss geschützt.

Aus Redundanzgründen ist es insbesondere nicht vorgesehen, auch die zweite Wicklungsgruppe über die zweite Schaltungsanordnung mit der Fahrzeugbatterie, also mit derselben Gleichspannungsquelle wie die erste Wicklungsgruppe, zu verbinden. Aus Kostengründen und auch Gewichtsgründen ist es darüber hinaus vorteilhaft, insbesondere keine zweite Fahrzeugbatterie als zweite Gleichspannungsquelle bereitzustellen, wodurch auch von der zweiten Wicklungsgruppe generierte negative Ströme entsprechend gehandhabt werden könnten. Stattdessen ist insbesondere vorgesehen, dass die zweite Gleichspannungsquelle eine Antriebsbatterie ist, die insbesondere ausgebildet ist, eine für den Antrieb von Rädern des Kraftfahrzeugs erforderliche Energie bereitzustellen. Diese Antriebsbatterie ist dabei insbesondere über einen unidirektionalen DC-DC-Wandler mit der zweiten Schaltungsanordnung verbunden. Ein DC-DC-Wandler wandelt dabei insbesondere die höhere Ausgangsspannung der Antriebsbatterie in eine niedrigere Spannung um, die insbesondere über einen zweiten DC-Bus, für einen Betrieb der zweiten Wicklungsgruppe bereitsteht sowie insbesondere zum Betrieb weiterer elektrischer Verbraucher, die an diesen zweiten DC-Bus angeschlossen sind. Zur Reduzierung von Kosten wird als DC-DC-Wandler bevorzugt ein unidirektionaler DC-DC-Wandler eingesetzt. Ein solcher unidirektionaler DC-DC-Wandler ist aber nicht dazu ausgebildet, einen aus einem Generatorbetrieb der zweiten Wicklungsgruppe resultierenden Stromfluss zu verarbeiten beziehungsweise der Antriebsbatterie zurückzuführen. Vielmehr könnte ein von der zweiten Wicklungsgruppe hervorgerufener negativer Stromfluss den DC-DC-Wandler schädigen, insbesondere wenn ein bestimmter Grenzwert überschritten wird. Darüber hinaus könnten durch von der zweiten Wicklungsgruppe generierte Ströme auch die weiteren an dem zweiten DC-Bus angeschlossenen Elektronikkomponenten geschädigt werden. Dem wird aber vorteilhafterweise durch die vorgeschlagene Drehmomentumverteilung entgegengewirkt, die vorsieht, dass die erste Wicklungsgruppe abweichend von der zweiten Wicklungsgruppe angesteuert wird, und in Bezug auf die erste Wicklungsgruppe ein größerer negativer Stromfluss zugelassen wird, als in Bezug auf die zweite Wicklungsgruppe. Denn auf diese Weise wird vorteilhafterweise das Auftreten eines durch den Lenksystem-Motor hervorgerufenen negativen Stromflusses auf dem zweiten DC-Bus bereits weitgehend verhindert, wobei ein durch den Lenksystem-Motor hervorgerufener negativer Stromfluss auf dem ersten DC-Bus vorteilhafterweise der Fahrzeugbatterie zugeführt wird, insbesondere als Ladestrom.

Eine vorteilhafte Ausgestaltung des Verfahrens sieht vor, dass bei dem Generatorbetrieb des Lenksystem-Motors die Drehmomentumverteilung zwischen der ersten Wicklungsgruppe und der zweiten Wicklungsgruppe weiter derart erfolgt, dass der Generatorbetrieb des Lenksystem-Motors bis zu einer festgelegten Vorgabe allein durch die erste Wicklungsgruppe umgesetzt wird. Die erste Wicklungsgruppe übernimmt dabei insofern vorteilhafterweise die Last der zweiten Wicklungsgruppe. Vorteilhafterweise wird so verhindert, dass durch die zweite Wicklungsgruppe negative Ströme erzeugt werden, die den zweiten DC-Bus und daran angeschlossene elektrische Verbraucher belasten könnten. Die Vorgabe ist dabei vorteilhafterweise dazu vorgesehen, eine Überlastung der ersten Wicklungsgruppe zu verhindern. Wird die festgelegte Vorgabe überschritten, ist insbesondere vorgesehen, dass die erste Wicklungsgruppe weiter nur bis zu der festgelegten Vorgabe in dem Generatorbetrieb betrieben wird, und - in Abhängigkeit von einer Bewertung des Erfordernisses des Überschreitens der Vorgabe - entweder der Generatorbetrieb limitiert und so ein Überschreiten der Vorgabe verhindert, oder die zweite Wicklungsgruppe ergänzend in dem Generatorbetrieb betrieben. Weiter vorteilhaft wird die zweite Wicklungsgruppe bei dem Generatorbetrieb des Lenksystem-Motors bis zu der festgelegten Vorgabe deaktiviert. Während die erste Wicklungsgruppe in dem Generatorbetrieb die Last übernimmt, wird die zweite Wicklungsgruppe also vorteilhafterweise heruntergefahren, insbesondere schrittweise heruntergefahren, insbesondere auf Null heruntergefahren, was bedeutet, dass sie dann nicht mehr aktiv betrieben wird.

Eine weitere Ausgestaltung des Verfahrens sieht insbesondere vor, dass bei dem Generatorbetrieb des Lenksystem-Motors die Drehmomentumverteilung zwischen der ersten Wicklungsgruppe und der zweiten Wicklungsgruppe weiter derart erfolgt, dass die erste Wicklungsgruppe im Generatorbetrieb und die zweite Wicklungsgruppe im Motorbetrieb betrieben wird. Durch das Betreiben der zweiten Wicklungsgruppe in dem Motorbetrieb liegt insofern in Bezug auf die zweite Wicklungsgruppe ein positiver Stromfluss, also ein "Stromverbrauch" vor. Die Problematik der Handhabung von negativen Strömen stellt sich somit vorteilhafterweise bei dieser Ausgestaltung für die zweite Wicklungsgruppe nicht und somit auch nicht für die damit über die Schaltungsanordnung verbundene zweite Gleichspannungsquelle sowie damit weiter verbundene Elektronikkomponenten. Somit wird durch diese Ansteuerung vorteilhafterweise wirksam verhindert, dass durch die zweite Wicklungsgruppe überhaupt negative Ströme auftreten. Wird also beispielsweise von dem Lenksystem-Motor ein Widerstandsdrehmoment von -2 Nm (Nm: Newtonmeter) angefordert, so ist bei dieser Verfahrensausgestaltung insbesondere vorgesehen, dass die erste Wicklungsgruppe zur Bereitstellung eines Widerstandsdrehmoments von -3 Nm angesteuert wird und die zweite Wicklungsgruppe zur Bereitstellung eines Drehmoments von +1 Nm angesteuert wird. Daraus resultiert dann das geforderte Drehmoment von -2 Nm und es wird verhindert, dass die zweite Wicklungsgruppe im Generatorbetrieb betrieben wird. Insbesondere ist auch eine andere Drehmomentverteilung möglich, wobei die Drehmomentverteilung vorteilhafterweise einen negativen Stromfluss durch die zweite Wicklungsgruppe auf dem zweiten DC-Bus verhindert.

Weiter vorteilhaft ist vorgesehen, dass in Bezug auf die zweite Wicklungsgruppe ein negativer Stromfluss auf einen vorgegebenen Grenzwert begrenzt wird. Dieser Grenzwert kann insbesondere bei 0 A (A: Ampere) liegen, wobei der Grenzwert auch anders festgelegt werden kann, insbesondere in Abhängigkeit von den zugelassenen negativen Strömen auf dem zweiten DC-Bus. Insbesondere dann, wenn die zweite Gleichspannungsquelle und/oder die schaltungstechnisch mit der zweiten Wicklungsgruppe verbundenen Elektronikkomponenten robust gegenüber einem gewissen negativen Stromfluss sind, kann bis zu einem als unkritisch bewerteten Wert für einen negativen Stromfluss ein negativer Stromfluss zugelassen werden, wobei dieser Wert dann vorteilhafterweise dem Grenzwert entspricht. Vorteilhafterweise wird durch die Einhaltung dieses Grenzwertes weiter zum Schutz vor Schäden durch den negativen Stromfluss beigetragen und darüber hinaus eine gewisse Unterstützung für das Aufbringen eines Lenkwiderstandsmoments durch die zweite Wicklungsgruppe zugelassen. Weiter insbesondere ist vorgesehen, dass ein negativer Stromfluss derart begrenzt wird, dass eine auftretende elektrische Ladung maximal in Höhe von 1,25 C (C: Coulomb) beziehungsweise 1,25 As (As: Amperesekunde) erlaubt wird. Auch diese Werte können abweichend festgelegt werden, insbesondere um bis zu 50 % abweichend festgelegt werden.

Gemäß einer weiteren vorteilhaften Ausgestaltung des Verfahrens wird bei dem Generatorbetrieb des Lenksystem-Motors das von dem Lenksystem-Motor bereitstellbare Gesamtdrehmoment auf ein durch die erste Wicklungsgruppe bereitstellbares Drehmoment begrenzt. Bei einem Bedarf nach einem höheren Drehmoment wird dabei insbesondere eine Perfomance-Einbuße hingenommen. Gemäß einer Ausgestaltungsvariante ist auch vorgesehen, dass ein unterstützendes Drehmoment durch die zweite Wicklungsgruppe bereitgestellt wird, wobei das von der zweiten Wicklungsgruppe bereitgestellte unterstützende Drehmoment kleiner gehalten wird, als das von der ersten Wicklungsgruppe bereitgestellte Drehmoment, wodurch ein negativer Stromfluss in Bezug auf die zweite Wicklungsgruppe vorteilhafterweise geringer gehalten wird, als ein negativer Stromfluss in Bezug auf die erste Wicklungsgruppe und somit insbesondere auch niedriger gehalten wird im Vergleich zu einer Drehmomentgleichverteilung zwischen den beiden Wicklungsgruppen. Wird ein solches unterstützendes Drehmoment durch die zweite Wicklungsgruppe zugelassen, ist insbesondere vorgesehen, dass dieses so begrenzt wird, dass ein dabei auftretender negativer Stromfluss auf den vorgegebenen Grenzwert begrenzt wird.

Eine weitere vorteilhafte Ausgestaltung sieht vor, dass die erste Schaltungsanordnung über einen ersten DC-Bus mit der ersten Gleichspannungsquelle verbunden ist und die zweite Schaltungsanordnung über einen zweiten DC-Bus mit der zweiten Gleichspannungsquelle verbunden ist, wobei die Drehmomentumverteilung zwischen der ersten Wicklungsgruppe und der zweiten Wicklungsgruppe erfolgt, wenn auf dem zweiten DC-Bus ein negativer Stromfluss erkannt wird. Vorteilhafterweise wird ein negativer Stromfluss auf dem zweiten DC-Bus von einer Sensoreinheit erkannt. Vorteilhafterweise erfolgt bei einem erkannten negativen Stromfluss ein Wechsel von einer Drehmomentgleichverteilung zwischen der ersten Wicklungsgruppe und der zweiten Wicklungsgruppe zu der Drehmomentumverteilung. Vorteilhafterweise wird hierdurch weiter zur Vermeidung von Schäden durch einen von dem Lenksystem-Motor verursachten negativen Stromfluss auf dem zweiten DC-Bus beigetragen.

Insbesondere ist vorgesehen, dass bei einem störungsfreien Motorbetrieb des Lenksystem-Motors, also insbesondere wenn kein Fehler im System vorliegt, eine Drehmomentgleichverteilung zwischen der ersten Wicklungsgruppe und der zweiten Wicklungsgruppe erfolgt. Vorteilhafterweise werden dabei die erste Wicklungsgruppe und die zweite Wicklungsgruppe in gleicher Weise angesteuert. Soll der Lenksystem-Motor beispielsweise ein Drehmoment von 6 Nm bereitstellen, ist bei dieser Ausgestaltung vorgesehen, dass die erste Wicklungsgruppe und die zweite Wicklungsgruppe in gleicher Weise einen Beitrag zur Bereitstellung dieses Drehmoments leisten, also insbesondere jeweils ein Drehmoment von 3 Nm bereitstellen.

Weiter vorteilhaft ist eine Drehmomentverteileinheit vorgesehen, mit der die Drehmomentverteilung zwischen der ersten Wicklungsgruppe und der zweiten Wicklungsgruppe gesteuert wird. Gemäß einer Weiterbildung dieser Ausgestaltung ist dabei vorteilhafterweise vorgesehen, dass die Drehmomentverteileinheit ein Schaltelement steuert, das eine elektrisch leitende Verbindung zwischen der der zweiten Wicklungsgruppe zugeordneten zweiten Schaltungsanordnung und der zweiten Gleichspannungsquelle öffnen und schließen kann. Vorteilhafterweise steuert die Drehmomentverteileinheit das Schaltelement bei einem erkannten negativen Stromfluss auf dem zweiten DC-Bus an, sodass dieses die elektrisch leitende Verbindung öffnet und so einen Stromrückfluss in Richtung der zweiten Gleichspannungsquelle unterbindet.

Gemäß einer weiteren vorteilhaften Ausgestaltung bestimmen die erste Steuereinheit und die zweite Steuereinheit beim Betrieb des Lenksystem-Motors für die erste Wicklungsgruppe und die zweite Wicklungsgruppe ein verfügbares Drehmoment, wobei eine Drehmomentverteileinheit ein gefordertes Drehmoment unter Berücksichtigung des für die erste Wicklungsgruppe und die zweite Wicklungsgruppe verfügbaren Drehmoments auf die erste Wicklungsgruppe und die zweite Wicklungsgruppe verteilt, insbesondere in einem Generatorbetrieb des Lenksystem-Motors.

Ein durch den Lenksystem-Motor hervorgerufener negativer Stromfluss wird insbesondere durch drei Faktoren beeinflusst. Dazu zählt insbesondere das Bezugsdrehmoment des Lenksystem-Motors, wobei das Vorzeichen des Drehmoments im Generatorbetrieb entgegengesetzt zum Vorzeichen der Winkelgeschwindigkeit des Lenksystem-Motors ist. Weiter wird ein negativer Stromfluss insbesondere durch die Motordrehzahl selbst beeinflusst, wobei eine höhe Drehzahl im Generatorbetrieb zu einem höheren negativen Stromfluss im Generatorbetrieb führt. Des Weiteren hängt ein hervorgerufener negativer Stromfluss von der hervorgerufenen Gleichspannung ab.

Eine weitere vorteilhafte Ausgestaltung des Verfahrens sieht vor, dass die erste Schaltungsanordnung über einen ersten DC-Bus mit der ersten Gleichspannungsquelle verbunden ist und die zweite Schaltungsanordnung über einen zweiten DC-Bus mit der zweiten Gleichspannungsquelle verbunden ist, wobei eine an dem zweiten DC-Bus anliegende Spannung überwacht wird. Die Drehmomentumverteilung zwischen der ersten Wicklungsgruppe und der zweiten Wicklungsgruppe erfolgt dabei vorteilhafterweise unter Berücksichtigung der an dem zweiten DC-Bus anliegenden Spannung. Insbesondere erfolgt die Drehmomentumverteilung dann, wenn die an dem zweiten DC-Bus anliegende Spannung einen vordefinierten Grenzwert überschreitet. Vorteilhafterweise erfolgt die Drehmomentumverteilung derart, dass die an dem zweiten DC-Bus anliegende Spannung den vordefinierten Grenzwert einhält.

Vorteilhafterweise kann somit die zweite Wicklungsgruppe ebenfalls im Generatorbetrieb betrieben werden, solange die an dem weiten DC-Bus anliegende Spannung den vordefinierten Grenzwert überschreitet, wobei die zweite Wicklungsgruppe dabei einen umso größeren Drehmomentanteil generieren kann und somit umso mehr Energie rekuperieren kann, je mehr Energie auf dem zweiten DC-Bus von den weiter an diesem zweiten DC-Bus angeschlossenen elektronischen Komponenten verbraucht wird. Vorteilhafterweise wird insofern auch ein aktueller Energiebedarf dieser weiteren Komponenten berücksichtigt und nicht nur ein Energiebedarf und eine Energiebereitstellung der zweiten Wicklungsgruppe allein berücksichtigt.

Gemäß einer vorteilhaften Weiterbildung wird ein von der zweiten Wicklungsgruppe im Generatorbetrieb des Lenksystem-Motors bereitgestellter Drehmomentanteil bei einem Überschreiten der an dem zweiten DC-Bus anliegenden Spannung schrittweise reduziert, insbesondere mittels eines Pl-Reglers (PI: proportional-integral) schrittweise reduziert. Vorteilhafterweise wird der von der zweiten Wicklungsgruppe im Generatorbetrieb des Lenksystem-Motors bereitgestellte Drehmomentanteil bei einem Überschreiten der an dem zweiten DC-Bus anliegenden Spannung schrittweise reduziert, bis ein Systemzustand erreicht ist, in dem ein maximal verfügbares Drehmoment in dem Generatorbetrieb des Lenksystem-Motors bereitgestellt wird und weiter vorteilhaft der vordefinierte Grenzwert von der an dem zweiten DC-Bus anliegenden Spannung eingehalten wird. Vorteilhafterweise passt sich während eines Fahrmanövers, bei dem sich das System im Generatorbetrieb befindet und der Energieverbrauch der an dem zweiten DC-Bus angeschlossenen weiteren Komponenten steigt, der Pl-Regler an die neue Situation an. Insbesondere sorgt der Pl-Regler vorteilhafterweise in einer solchen Situation dafür, dass der Lenksystem-Motor mittels der zweiten Wicklungsgruppe stärker rekuperiert und somit insbesondere mehr Rückgewinnung erlaubt, was vorteilhafterweise eine höhere Dämpfungsleistung ermöglicht, um den zusätzlichen Verbrauch der an dem zweiten DC-Bus angeschlossenen Komponenten auszugleichen - insbesondere wie ein Spannungsregler beziehungsweise ähnlich wie ein Spannungsregler.

Insbesondere ist vorgesehen, dass der Lenksystem-Motor ein Motor eines Feedback-Aktuators in einem Steer-by-Wire-Lenksystem oder ein Motor eines auf ein Koppelelement, insbesondere eine Zahnstange, wirkenden Lenkstellers in einem elektromechanischen Lenksystem ist, wobei der Lenksteller über eine Lenkwellenanordnung mit der Lenkhandhabe gekoppelt ist.

Das zur Lösung der eingangs genannten Aufgabe des Weiteren vorgeschlagene elektromechanische Lenksystem umfasst einen Lenksystem-Motor, der mit einer Lenkhandhabe des Lenksystems gekoppelt ist, und der bei einem Betrieb des Lenksystems in einem Kraftfahrzeug ausgebildet ist, durch einen Motorbetrieb oder durch einen Generatorbetrieb ein Lenkverhalten, insbesondere ein Lenkwiderstandsmoment, der Lenkhandhabe zu beeinflussen. Der Lenksystem-Motor umfasst eine erste Wicklungsgruppe mit drei ersten Phasen und eine zweite Wicklungsgruppe mit drei zweiten Phasen. Der Lenksystem-Motor ist bei einem Betrieb des Lenksystems weiter derart ausgebildet, dass die erste Wicklungsgruppe über einer erste Schaltungsanordnung mit einer zugeordneten ersten Steuereinheit und die zweite Wicklungsgruppe über eine zweite Schaltungsanordnung mit einer zugeordneten zweiten Steuereinheit separat voneinander angesteuert werden können, wobei der Lenksystem-Motor insbesondere die erste Schaltungsanordnung und die erste Steuereinheit sowie die zweite Schaltungsanordnung und die zweite Steuereinheit umfasst, und darüber hinaus ausgebildet, bei einem Betrieb des Lenksystems in einem Kraftfahrzeug gemäß einem erfindungsgemäß ausgebildeten Verfahren betrieben zu werden. Insbesondere sind die dem Lenksystem-Motor zugeordneten Steuereinheiten dabei ausgebildet, die erste Wicklungsgruppe abweichend von der zweiten Wicklungsgruppe anzusteuern, wenn von dem Lenksystem-Motor ein Drehmoment bereitgestellt werden soll, das einen Generatorbetrieb des Lenksystem-Motors erfordert. Die dem Lenksystem-Motor zugeordneten Steuereinheiten sind dabei insbesondere weiter ausgebildet, eine Drehmomentumverteilung zwischen der ersten Wicklungsgruppe und der zweiten Wicklungsgruppe vorzunehmen, und in Bezug auf die erste Wicklungsgruppe einen größeren negativen Stromfluss zuzulassen, als in Bezug auf die zweite Wicklungsgruppe. Dies führt vorteilhafterweise zu den im Zusammenhang mit den entsprechenden Verfahrensmerkmalen beschriebenen Vorteilen, die entsprechend auch für das vorgeschlagene Lenksystem gelten. Insbesondere umfasst das elektromechanische Lenksystem die erste Schaltungsanordnung und die erste Steuereinheit sowie die zweite Schaltungsanordnung und die zweite Steuereinheit, wobei insbesondere zumindest die erste Schaltungsanordnung und die zweite Schaltungsanordnung von dem Lenksystem-Motor des elektromechanischen Lenksystems umfasst sind, weiter insbesondere die erste Schaltungsanordnung und die erste Steuereinheit sowie die zweite Schaltungsanordnung und die zweite Steuereinheit von dem Lenksystem-Motor des elektromechanischen Lenksystems umfasst sind.

Eine vorteilhafte Ausgestaltung des elektromechanischen Lenksystems sieht vor, dass der Lenksystem-Motor der Motor eines auf ein Koppelelement des Lenksystems, insbesondere eine Zahnstange des Lenksystems, wirkenden Lenkstellers des Lenksystems ist, wobei der Lenksteller mechanisch mit der Lenkhandhabe verbunden ist, insbesondere über eine Lenkwellenanordnung.

Gemäß einer vorteilhaften Ausgestaltungsvariante ist das Lenksystem ein Steer-by-Wire-Lenksystem, wobei der Lenksystem-Motor der Motor eines Feedback-Aktuators ist, wobei der Motor mechanisch mit einer Lenkwelle, an der die Lenkhandhabe angeordnet ist, gekoppelt ist. Der Motor des Feedback-Aktuators kann dabei insbesondere über eine Getriebeanordnung mit der Lenkwelle gekoppelt sein.

Das des Weiteren zur Lösung der eingangs genannten Aufgabe vorgeschlagene Kraftfahrzeug umfasst ein erfindungsgemäß ausgebildetes Lenksystem, also insbesondere ein Lenksystem, das einen Lenksystem-Motor umfasst, der ausgebildet ist, nach einem erfindungsgemäß ausgebildeten Verfahren betrieben zu werden. Des Weiteren umfasst das Kraftfahrzeug wenigstens eine erste Geleichspannungsquelle und eine zweite Gleichspannungsquelle, wobei die erste Wicklungsgruppe des Lenksystem-Motors des Lenksystems über einen ersten DC-Bus des Kraftfahrzeugs mit der ersten Gleichspannungsquelle verbunden ist und die zweite Wicklungsgruppe des Lenksystem-Motors des Lenksystems über einen zweiten DC-Bus des Kraftfahrzeugs mit der zweiten Gleichspannungsquelle verbunden ist. Durch das erfindungsgemäß ausgebildete Lenksystem ist vorteilhafterweise ein Generatorbetrieb des Lenksystem-Motors ermöglicht, wobei Schäden durch negative Ströme, also insbesondere durch im Generatorbetrieb generierte Ströme, vermieden werden. Insbesondere ist vorgesehen, dass die erste Gleichspannungsquelle eine Fahrzeugbatterie ist, wobei die erste Gleichspannungsquelle ausgebildet ist, einen von der ersten Wicklungsgruppe des Lenksystem-Motors generierten Strom aufzunehmen. Insbesondere ist die Fahrzeugbatterie in dem Kraftfahrzeug nicht dafür eingerichtet, die für einen Antrieb von Rädern des Kraftfahrzeugs erforderliche Energie bereitzustellen. Weiter insbesondere ist die Fahrzeugbatterie eine 12V-Autobatterie, insbesondere eine sogenannte "Starterbatterie", weiter insbesondere eine AGM-Batterie. Die zweite Gleichspannungsquelle ist dagegen vorteilhafterweise eine Antriebsbatterie, also insbesondere eine Batterie, die in dem Kraftfahrzeug dafür eingerichtet ist, Energie für den Antrieb von Rädern des Kraftfahrzeugs bereitzustellen. Die Antriebsbatterie ist dabei insbesondere über einen unidirektionalen DC-DC-Wandler an den zweiten DC-Bus angebunden. Die Anbindung über einen kostengünstigen unidirektionalen DC-DC-Wandler an den zweiten DC-Bus wird dabei insbesondere durch das erfindungsgemäß ausgebildete Lenksystem ermöglicht, das verhindert, dass in einem Generatorbetrieb des Lenksystem-Motors von dem Lenksystem-Motor generierte Ströme den unidirektionalen DC-DC-Wandler schädigen.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer vereinfachten perspektivischen Darstellung ein Ausführungsbeispiel für ein erfindungsgemäß ausgebildetes elektromechanisches Lenksystem;
- Fig. 2: ein Blockschaltbild zur Erläuterung eines Ausführungsbeispiels für ein erfindungsgemäß ausgebildetes Verfahren zum Betreiben eines Lenksystem-Motors während eines Motorbetriebs;
- Fig. 3: ein Blockschaltbild zur Erläuterung des Ausführungsbeispiels für ein erfindungsgemäß ausgebildetes Verfahren zum Betreiben eines Lenksystem-Motors gemäß Fig. 2 während eines Generatorbetriebs;
- Fig. 4: ein Blockschaltbild zur Erläuterung eines weiteren Ausführungsbeispiels für ein erfindungsgemäß ausgebildetes Verfahren zum Betreiben eines Lenksystem-Motors gemäß Fig. 2 während eines Generatorbetriebs; und
- Fig. 5: in einer vereinfachten Schaltbild-Darstellung eine Lenksystem-Motor-Anordnung in einem Kraftfahrzeug zur Erläuterung eines Ausführungsbeispiels für ein erfindungsgemäß ausgebildetes Verfahren zum Betreiben eines Lenksystem-Motors.

In den verschiedenen Figuren sind gleiche Teile in der Regel mit den gleichen Bezugszeichen versehen und werden daher mitunter auch jeweils nur im Zusammenhang mit einer der Figuren erläutert.

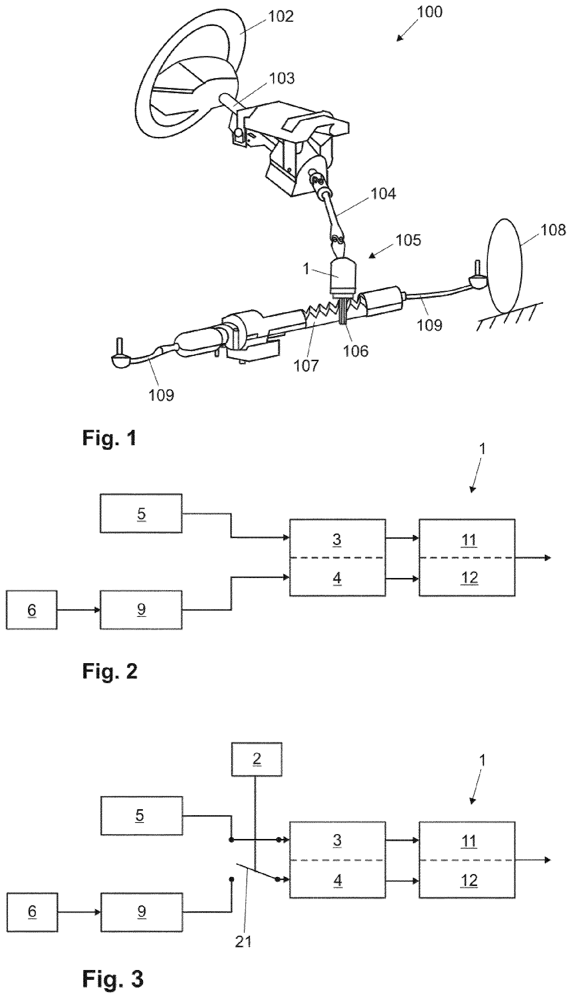

In Fig. 1 ist ein Ausführungsbeispiel für ein elektromechanisches Lenksystem 100 eines Kraftfahrzeugs dargestellt. Das Lenksystem 100 umfasst eine Lenksäule mit einer oberen Lenkwelle 103, an dessen oberem Ende eine als Lenkrad ausgebildete Lenkhandhabe 102 drehfest angeordnet ist. Die obere Lenkwelle 103 bildet zusammen mit einer unteren Lenkwelle 104 eine Lenkwellenkonstruktion, die über ein Lenkgetriebe mechanisch mit lenkbaren Rädern 108 gekoppelt ist. Das Lenkgetriebe umfasst in diesem Ausführungsbeispiel einen Lenksteller 105 mit einem mit einem Lenksystem-Motor 1, der ausgebildet ist, bei entsprechender Ansteuerung ein Lenkritzel 106 anzutreiben, und ein als Zahnstange ausgebildetes Koppelelement 107. Das Lenkritzel 106 wirkt dabei auf das Koppelelement 107, sodass eine rotatorische Bewegung des Lenkritzels 106 eine translatorische Bewegung des Koppelelements 107 entlang dessen Längsachse hervorruft. Die sich entlang ihrer Längsachse linear bewegende Koppelstange 107 ist in diesem Ausführungsbeispiel jeweils zu beiden Seiten mechanisch mit einer Spurstange 109 gekoppelt. Die Spurstangen 109 sind wiederum jeweils mit den lenkbaren Rädern 108 mechanisch gekoppelt. Wird durch Drehen der Lenkhandhabe 102 eine Lenkvorgabe getätigt, kann durch den mechanisch mit der Lenkhandhabe 102 gekoppelten Lenksystem-Motor 1 des Lenkstellers 105 somit die Lenkvorgabe, insbesondere unter Berücksichtigung weiterer erfasster Eingangsgrößen, in eine Lenkbewegung der lenkbaren Räder 108 umgesetzt werden.

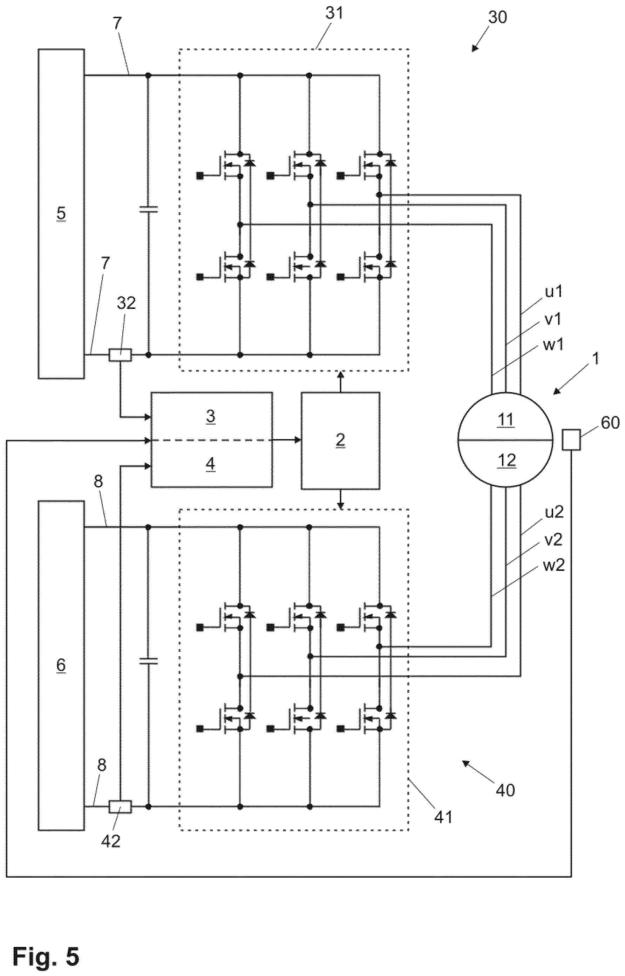

Zur Erhöhung der Ausfallsicherheit sind der Lenksystem-Motor 1 des Lenkstellers sowie die zur Ansteuerung des Lenksystem-Motors 1 erforderlichen Komponenten redundant ausgebildet, insbesondere wie in dem Ausführungsbeispiel gemäß Fig. 5 skizziert. Der Lenksystem-Motor 1 umfasst eine erste Wicklungsgruppe mit drei ersten Phasen und eine zweite Wicklungsgruppe mit drei zweiten Phasen. Zudem sind dem Lenksystem-Motor 1 zur Ansteuerung eine erste Schaltungsanordnung mit einer ersten Steuereinheit und eine zweite Schaltungsanordnung mit einer zweiten Steuereinheit zugeordnet, die insbesondere auch von dem Lenksystem-Motor 1 umfasst sein können. Der Lenksystem-Motor 1 ist dabei derart eingerichtet, dass bei einem Betrieb des Lenksystems 100 die erste Wicklungsgruppe über die erste Schaltungsanordnung von der ersten Steuereinheit angesteuert werden kann, und die zweite Wicklungsgruppe über die zweite Schaltungsanordnung von der zweiten Steuereinheit angesteuert werden kann. Die erste Steuereinheit und die zweite Steuereinheit empfangen dabei die gleichen oder zumindest vergleichbare Eingangsgrößen, unter deren Berücksichtigung die Steuereinheiten die erste Wicklungsgruppe und zweite Wicklungsgruppe jeweils separat voneinander ansteuern können.

Der Lenksystem-Motor 1 des Lenkstellers 105 wird dabei bei einem Betrieb des Lenksystems 100 in einem Kraftfahrzeug, insbesondere in einem PKW (PKW: Personenkraftwagen), zur Umsetzung einer Lenkvorgabe meist in einem Motorbetrieb betrieben, wobei durch die mechanische Kopplung des Lenkstellers 105 mit der Lenkhandhabe 102 durch den Lenksystem-Motor 1 das Lenkverhalten der Lenkhandhabe 102 beeinflusst wird. In dem Motorbetrieb des Lenksystem-Motors 1 werden die erste Wicklungsgruppe und die zweite Wicklungsgruppe in gleicher Weise angesteuert, sodass durch beide Wicklungsgruppen ein im Wesentlichen gleiches Drehmoment bereitgestellt wird, aus dem sich dann das Gesamtdrehmoment additiv zusammensetzt.

Es ergeben sich bei dem Betrieb eines Kraftfahrzeugs aber insbesondere auch Situationen, in denen der Lenksystem-Motor 1 in einem Generatorbetrieb betrieben wird, insbesondere damit der Lenksystem-Motor als Motorbremse wirkt, beispielsweise um ein Lenkwiderstandsdrehmoment auf die Lenkhandhabe 102 aufzubringen, und so das Lenkverhalten der Lenkhandhabe 102 zu beeinflussen. In dem Generatorbetrieb des Lenksystem-Motors 1 wird dabei gegenüber dem Motorbetrieb eine Drehmomentumverteilung zwischen der ersten Wicklungsgruppe und der zweiten Wicklungsgruppe in der Weise vorgenommen, dass die erste Wicklungsgruppe abweichend von der zweiten Wicklungsgruppe angesteuert wird, und die erste Wicklungsgruppe dabei einen größeren Anteil an dem in dem Generatorbetrieb bereitzustellenden Drehmoment liefert, als die zweite Wicklungsgruppe, und somit in Bezug auf die erste Wicklungsgruppe ein größerer negativer Stromfluss zugelassen wird, als in Bezug auf die zweite Wicklungsgruppe. In Bezug auf die zweite Wicklungsgruppe erfolgt die Ansteuerung derart, dass ein negativer Stromfluss auf einen vorgegebenen Grenzwert begrenzt wird.

Ein Ausführungsbeispiel für ein Verfahren zum Betreiben eines Lenksystem-Motors wird dabei nachfolgend unter Bezugnahme auf Fig. 2 und Fig. 3 beschrieben, wobei insbesondere auch der Lenksystem-Motor 1 aus dem Ausführungsbeispiel gemäß Fig. 1, wie unter Bezugnahme auf Fig. 2 und Fig. 3 beschrieben, betrieben werden kann. Fig. 2 zeigt dabei einen Motorbetrieb eines Lenksystem-Motors 1 und Fig. 3 einen Generatorbetrieb des Lenksystem-Motors 1.

Der Lenksystem-Motor 1 umfasst in den in Fig. 2 und Fig. 3 gezeigten Ausführungsbeispielen jeweils eine erste Wicklungsgruppe 11 mit drei ersten Phasen und eine zweite Wicklungsgruppe 12 mit drei zweiten Phasen, wobei die erste Wicklungsgruppe 11 über eine erste Schaltungsanordnung (in Fig. 2 und Fig. 3 nicht explizit dargestellt) von einer ersten Steuereinheit 3 und die zweite Wicklungsgruppe 12 über eine zweite Schaltungsanordnung (in Fig. 2 und Fig. 3 nicht explizit dargestellt) von einer zweiten Steuereinheit 4 separat voneinander angesteuert werden. Die erste Steuereinheit 3 und die zweite Steuereinheit 4 sind in den Ausführungsbeispielen als ECU (ECU: Electronic Control Unit) ausgebildet.

Die erste Schaltungsanordnung mit der ersten Steuereinheit 3 ist bei den in Fig. 2 und Fig. 3 gezeigten Ausführungsbeispielen mit einer ersten Gleichspannungsquelle 5 verbunden, welche die für einen Motorbetrieb der ersten Wicklungsgruppe 11 benötigte Energie bereitstellt und als Fahrzeugbatterie ausgebildet ist, die keine für den Antrieb von Rädern des Kraftfahrzeugs erforderliche Energie bereitstellt. Die Fahrzeugbatterie kann insbesondere als AGM-Batterie ausgebildet sein.

Die zweite Schaltungsanordnung mit der zweiten Steuereinheit 4 ist bei den in Fig. 2 und Fig. 3 gezeigten Ausführungsbeispielen über einen unidirektionalen DC-DC-Wandler 9 mit einer zweiten Gleichspannungsquelle 6 verbunden, welche über den unidirektionalen DC-DC-Wandler 9 die für einen Motorbetrieb der zweiten Wicklungsgruppe 12 benötigte Energie bereitstellt und als Antriebsbatterie ausgebildet ist, die eine für den Antrieb von Rädern eines Kraftfahrzeugs erforderliche Energie bereitstellt.

Bei dem in Fig. 2 gezeigten Motorbetrieb des Lenksystem-Motors 1 erfolgt eine Drehmomentgleichverteilung zwischen der ersten Wicklungsgruppe 11 und der zweiten Wicklungsgruppe 12. Wird beispielsweise ein Drehmoment von dem Lenksystem-Motor 1 von 5 Nm gefordert, erfolgt die Ansteuerung der Wicklungsgruppen 11, 12 über die Steuereinheiten 3, 4 derart, dass durch jede Wicklungsgruppe ein Drehmoment von 2,5 Nm, und somit in Summe das geforderte Gesamtdrehmoment von 5 Nm bereitgestellt wird.

Bei einem Generatorbetrieb des Lenksystem-Motors 1, bei dem von dem Lenksystem-Motor 1 ein elektrischer Strom generiert wird, erfolgt dagegen eine Drehmomentumverteilung zwischen der ersten Wicklungsgruppe 11 und der zweiten Wicklungsgruppe 12, wie in Fig. 3 dargestellt. Hierbei wird die erste Wicklungsgruppe 11 abweichend von der zweiten Wicklungsgruppe 12 angesteuert, indem durch eine Drehmomentverteileinheit 2 bei einem Wechsel von einem Motorbetrieb zu einem Generatorbetrieb ein Schaltelement 21 öffnet und somit die elektrisch leitende Verbindung zwischen dem unidirektionalen DC-DC-Wandler 9 und der Schaltungsanordnung mit der zweiten Steuereinheit 4 unterbricht. Hierdurch wird verhindert, dass ein negativer Stromfluss auf Seite der zweiten Wicklungsgruppe 12 auftritt. Auf Seite der ersten Wicklungsgruppe 11 wird hingegen ein negativer Stromfluss zugelassen, wobei die als Fahrzeugbatterie ausgebildete erste Gleichspannungsquelle 5 die von der ersten Wicklungsgruppe 11 in dem Generatorbetrieb erzeugte Energie umwandelt und somit schadlos macht. Wird wieder zu einem Motorbetrieb gewechselt, erfolgt der Betrieb wieder, wie in Fig. 2 gezeigt.

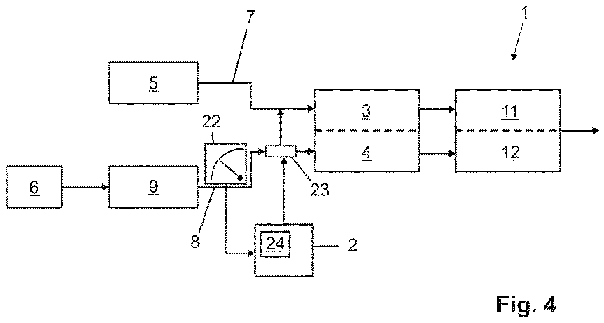

Eine Ausgestaltungsvariante für den Generatorbetrieb des Lenksystem-Motors 1, wie unter Bezugnahme auf Fig. 3 erläutert, ist in Fig. 4 skizziert und wird nachfolgend erläutert. Bei dieser Ausgestaltungsvariante ist vorgesehen, dass die erste Schaltungsanordnung mit der ersten Steuereinheit 3 über einen ersten DC-Bus 7 mit der als Fahrzeugbatterie ausgebildeten ersten Gleichspannungsquelle 5 verbunden ist und die zweite Schaltungsanordnung mit der zweiten Steuereinheit 4 über einen zweiten DC-Bus 8 und den DC-DC-Wandler 9 mit der als Antriebsbatterie ausgebildeten zweiten Gleichspannungsquelle 6 verbunden ist. Mittels einer Spannungsmesseinheit 22 wird dabei während des Generatorbetriebs des Lenksystem-Motors 1 eine an dem zweiten DC-Bus 8 anliegende Spannung erfasst. Die Drehmomentumverteilung zwischen der ersten Wicklungsgruppe 11 und der zweiten Wicklungsgruppe 12 erfolgt dabei unter Berücksichtigung der an dem zweiten DC-Bus 8 anliegenden Spannung.

Unter Nutzung der Drehmomentverteileinheit 2 wird dabei überwacht, ob die erfasste Spannung einen vordefinierten Grenzwert überschreitet. Überschreitet die an dem zweiten DC-Bus 8 anliegende Spannung den vordefinierten Grenzwert, dann erfolgt unter Nutzung der Drehmomentverteileinheit 2 und des Schaltungselements 23, auf das die Drehmomentverteileinheit 2 einwirken kann, die Drehmomentumverteilung von der zweiten Wicklungsgruppe 12 auf die erste Wicklungsgruppe 11 des Lenksystem-Motors 1 derart, dass die an dem zweiten DC-Bus 8 anliegende Spannung auf den vordefinierten Grenzwert für die Spannung zurückgeführt wird und den vordefinierten Grenzwert einhält. Dabei ist in diesem Ausführungsbeispiel vorgesehen, dass ein von der zweiten Wicklungsgruppe im Generatorbetrieb des Lenksystem-Motors 1 bereitgestellter Drehmomentanteil bei einem Überschreiten der an dem zweiten DC-Bus 8 anliegenden Spannung mittels eines Pl-Reglers 24 schrittweise reduziert wird, bis die an dem zweiten DC-Bus 8 anliegende Spannung wieder den vordefinierten Grenzwert einhält. Von der zweiten Wicklungsgruppe 12 kann dabei in den meisten Betriebsfällen vorteilhafterweise weiterhin ein Drehmomentanteil bereitgestellt werden, insbesondere ohne dass ein negativer Stromfluss durch die zweite Wicklungsgruppe 12 kritisch wird, denn dieser negative Stromfluss wird vorteilhafterweise durch weitere an dem zweiten DC-Bus angeschlossene elektrische Verbraucher (in Fig. 4 nicht explizit dargestellt) aufgenommen. Da der Energiebedarf dieser elektrischen Verbraucher im Betrieb schwanken kann, kann auch das von der zweiten Wicklungsgruppe 12 im Generatorbetrieb bereitgestellte Dämpfungsmoment schwanken und wird mittels des Pl-Reglers 24 jeweils angepasst, wobei die Drehmomentverteileinheit 2 mit dem Pl-Regler 24 und dem Schaltungselement 23 ähnlich einem Spannungsregler wirkt.

Anhand der in Fig. 5 dargestellten Lenksystem-Motor-Anordnung in einem Kraftfahrzeug wird ein weiteres Ausführungsbeispiel für ein Verfahren zum Betreiben eines Lenksystem-Motors 1 in einem Kraftfahrzeug erläutert. Die in Fig. 5 dargestellte, redundant ausgebildete Lenksystem-Motor-Anordnung umfasst dabei einen Lenksystem-Motor 1, der eine erste Wicklungsgruppe 11 mit drei ersten Phasen u1, v1, w1 und eine zweite Wicklungsgruppe 12 mit drei zweiten Phasen u2, v2, w2 aufweist. Der Lenksystem-Motor 1 kann dabei in einem Motorbetrieb und in einem Generatorbetrieb betrieben werden. Dem Lenksystem-Motor 1 ist darüber hinaus ein Rotorpositionssensor 60 zugeordnet, mit dem insbesondere eine aktuelle Drehzahl des Lenksystem-Motors 1 erfasst werden kann. Der Lenksystem-Motor 1 kann insbesondere der Motor eines auf ein Koppelelement wirkenden Lenkstellers eines Lenksystems eines Kraftfahrzeugs sein. Alternativ kann der Lenksystem-Motor 1 insbesondere der Motor eines Feedback-Aktuators eines Steer-by-Wire-Lenksystems eines Kraftfahrzeugs sein.

Die in Fig. 5 dargestellte Lenksystem-Motor-Anordnung umfasst zudem eine erste Schaltungsanordnung 30 mit einer dieser ersten Schaltungsanordnung 30 zugeordneten ersten Steuereinheit 3, eine zweite Schaltungsanordnung 40 mit einer dieser zweiten Schaltungsanordnung 40 zugeordneten zweiten Steuereinheit 4 und eine Drehmomentverteileinheit 2. Darüber hinaus umfasst die in Fig. 5 dargestellte Lenksystem-Motor-Anordnung eine als Fahrzeugbatterie ausgebildete erste Gleichspannungsquelle 5 und eine zweite Gleichspannungsquelle 6, wobei die zweite Gleichspannungsquelle 6 als ein unidirektionaler, an eine Antriebsbatterie angeschlossener DC-DC-Wandler ausgebildet ist. Die erste Schaltungsanordnung 30 ist dabei über einen ersten DC-Bus 7 mit der ersten Gleichspannungsquelle 5 verbunden, und die zweite Schaltungsanordnung 40 ist über einen zweiten DC-Bus 8 mit der zweiten Gleichspannungsquelle 6 verbunden.

Die erste Schaltungsanordnung 30 und die zweite Schaltungsanordnung 40 umfassen jeweils einen ersten Strommesswiderstand 32 und einen zweiten Strommesswiderstand 42, insbesondere einen ersten Shunt und einen zweiten Shunt, wobei mittels des jeweiligen Strommesswiderstandes 32, 42 erkannt werden kann, ob ein negativer Stromfluss auf dem ersten DC-Bus 7 oder auf dem zweiten DC-Bus 8 auftritt, also insbesondere ob die erste Wicklungsgruppe 11 oder die zweite Wicklungsgruppe 12 in einem Generatorbetrieb betrieben wird. Die Signale des dem ersten DC-Bus 7 zugeordneten Strommesswiderstandes 32 werden dabei an die erste Steuereinheit 3 übertragen. Die Signale des dem zweiten DC-Bus 8 zugeordneten Strommesswiderstandes 42 werden an die zweite Steuereinheit 4 übertragen.

Die erste Steuereinheit 3 und die zweite Steuereinheit 4 empfangen darüber hinaus die Signale des dem Lenksystem-Motor 1 zugeordneten Rotorpositionssensors 60. Darüber hinaus empfangen die Steuereinheiten 3, 4 noch weitere Eingangsgrößen in Bezug auf das von dem Lenksystem-Motor 1 bereitzustellende Drehmoment, was in Fig. 5 nicht explizit dargestellt ist. Basierend auf den empfangenen Eingangssignalen erzeugen die erste Steuereinheit 3 und die zweite Steuereinheit 4 ein Anforderungssignal für die Drehmomentverteileinheit 2, die wiederum über einen ersten Wechselrichter 31 der ersten Schaltungsanordnung 30 die erste Wicklungsgruppe 11 des Lenksystem-Motors 1 ansteuert und über einen zweiten Wechselrichter 41 der zweiten Schaltungsanordnung 40 die zweite Wicklungsgruppe 12 des Lenksystem-Motors 1 ansteuert. Mittes der ersten Steuereinheit 3 und der zweiten Steuereinheit 4 können die erste Wicklungsgruppe 11 und die zweite Wicklungsgruppe 12 dabei separat voneinander angesteuert werden.

Wird weder von dem ersten Strommesswiderstand 32 noch von dem zweiten Strommesswiderstand 42 ein negativer Stromfluss erfasst, und somit von dem Lenksystem-Motor 1 kein Strom erzeugt, und der Lenksystem-Motor 1 somit insgesamt in einem Motorbetrieb betrieben, so erfolgt im störungsfreien Normalbetrieb eine Drehmomentgleichverteilung zwischen der ersten Wicklungsgruppe 11 und der zweiten Wicklungsgruppe 12. Die Drehmomentverteileinheit 2 teilt ein angefordertes von dem Lenksystem-Motor 1 umzusetzendes Drehmoment also gleich auf die erste Wicklungsgruppe 11 und die zweite Wicklungsgruppe 12 auf. Wird mittels des zweiten Strommesswiderstands 42 auf dem zweiten DC-Bus 8 ein negativer Stromfluss erkannt, erfolgt hingegen eine Drehmomentumverteilung zwischen der ersten Wicklungsgruppe 11 und der zweiten Wicklungsgruppe 12, bei der die erste Wicklungsgruppe 11 abweichend von der zweiten Wicklungsgruppe 12 angesteuert wird. Denn in Bezug auf die erste Wicklungsgruppe 11 kann ein größerer negativer Stromfluss zugelassen werden, als in Bezug auf die zweite Wicklungsgruppe 12, weil die erste Gleichspannungsquelle 5 eingerichtet ist, von der ersten Wicklungsgruppe 11 erzeugte Energie, also einen negativen Stromfluss, aufzunehmen und insbesondere zu speichern. In Bezug auf die zweite Wicklungsgruppe 12 und den zweiten DC-Bus 8 wird hingegen ein negativer Stromfluss auf einen vorgegebenen Grenzwert begrenzt, weil der unidirektionale DC-DC-Wandler der zweiten Gleichspannungsquelle 6 nicht dazu ausgebildet ist, von der zweiten Wicklungsgruppe 12 erzeugte Energie als einen negativen Stromfluss aufzunehmen, und sogar durch einen negativen Stromfluss beschädigt werden kann. Da ein negativer Stromfluss auf dem zweiten DC-Bus 8 insofern nicht abgebaut werden kann, bestünde des Weiteren ein Risiko, dass weitere an den zweiten DC-Bus 8 angeschlossene Elektronikkomponenten geschädigt würden. Der Grenzwert ist vorteilhafterweise so gewählt, dass solche Schäden ausgeschlossen werden.

Insbesondere erfolgt in dem Fall, in dem der Lenksystem-Motor 1 in der Gesamtbetrachtung in einem Generatorbetrieb betrieben wird, die Drehmomentumverteilung zwischen der ersten Wicklungsgruppe 11 und der zweiten Wicklungsgruppe 12 derart, dass nur die erste Wicklungsgruppe 11 im Generatorbetrieb betrieben wird und allein das von dem Lenksystem-Motor 1 geforderte Drehmoment bereitstellt, also ohne Unterstützung durch die zweite Wicklungsgruppe 12. Das bei dem Generatorbetrieb des Lenksystem-Motors 1 von dem Lenksystem-Motor 1 bereitstellbare Gesamtdrehmoment wird dann auf das durch die erste Wicklungsgruppe 11 bereitstellbare Drehmoment begrenzt.

Die erste Steuereinheit 3 und die zweite Steuereinheit 4 bestimmen beim Betreiben des Lenksystem-Motors 1 dabei insbesondere für die erste Wicklungsgruppe 11 und die zweite Wicklungsgruppe 12 fortlaufend ein verfügbares Drehmoment, welches durch die erste Wicklungsgruppe 11 und die zweite Wicklungsgruppe 12 jeweils bereitgestellt werden kann. Die Drehmomentverteileinheit 2 verteilt ein von dem Lenksystem-Motor 1 gefordertes Drehmoment dann unter Berücksichtigung des von der ersten Wicklungsgruppe 11 und des von der zweiten Wicklungsgruppe 12 jeweils unter den vorstehend beschriebenen Rahmenbedingungen bereitstellbaren Drehmoments auf die erste Wicklungsgruppe 11 und die zweite Wicklungsgruppe 12. Das führt dann dazu, dass die Wicklungsgruppen 11, 12 in einem Generatorbetrieb des Lenksystem-Motors 1 asymmetrisch betrieben werden. Nach einem Generatorbetrieb, also einer Wiederaufnahme eines Motorbetriebs des Lenksystem-Motors 1, wird dann das Drehmoment von der Drehmomentverteileinheit 2 wieder gleich auf die erste Wicklungsgruppe 11 und die zweite Wicklungsgruppe 12 verteilt. Eine asymmetrische Verteilung des Drehmoments in einem Motorbetrieb ist insbesondere dann vorgesehen, wenn eine Störung auftritt, die eine Gleichverteilung nicht zulässt.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksystem-Motor
- 11: erste Wicklungsgruppe
- 12: zweite Wicklungsgruppe
- u1, v1, w1: Phasen der ersten Wicklungsgruppe (11)
- u2, v2, w2: Phasen der zweiten Wicklungsgruppe (12)
- 2: Drehmomentverteileinheit
- 21: Schaltelement
- 22: Spannungsmesseinrichtung
- 23: Schaltungselement
- 24: Pl-Regler
- 3: erste Steuereinheit
- 30: erste Schaltungsanordnung
- 31: erster Wechselrichter
- 32: Strommesswiderstand
- 4: zweite Steuereinheit
- 40: zweite Schaltungsanordnung
- 41: zweiter Wechselrichter
- 42: Strommesswiderstand
- 5: erste Gleichspannungsquelle
- 6: zweite Gleichspannungsquelle
- 7: erster DC-Bus
- 8: zweiter DC-Bus
- 9: unidirektionaler DC-DC-Wandler
- 60: Rotorpositionssensor
- 100: elektromechanisches Lenksystem
- 102: Lenkhandhabe
- 103: obere Lenkwelle
- 104: untere Lenkwelle
- 105: Lenksteller
- 106: Lenkritzel
- 107: Koppelelement
- 108: lenkbares Rad
- 109: Spurstange

## Patentansprüche

1. Verfahren zum Betreiben eines Lenksystem-Motors (1) in einem Kraftfahrzeug,
wobei der Lenksystem-Motor (1) mit einer Lenkhandhabe (102) gekoppelt ist und der Lenksystem-Motor (1) beim Betreiben des Kraftfahrzeugs durch einen Motorbetrieb oder einen Generatorbetrieb ein Lenkverhalten der Lenkhandhabe (102) beeinflusst, wobei der Lenksystem-Motor (1) eine erste Wicklungsgruppe (11) mit drei ersten Phasen (u1, v1, w1) und eine zweite Wicklungsgruppe (12) mit drei zweiten Phasen (u2, v2, w2) umfasst,
wobei die erste Wicklungsgruppe (11) über eine erste Schaltungsanordnung (30) mit einer zugeordneten ersten Steuereinheit (3) und die zweite Wicklungsgruppe (12) über eine zweite Schaltungsanordnung (40) mit einer zugeordneten zweiten Steuereinheit (4) separat voneinander angesteuert werden,
wobei die erste Schaltungsanordnung (30) mit einer ersten Gleichspannungsquelle (5) verbunden ist, welche die für einen Motorbetrieb der ersten Wicklungsgruppe (11) benötigte Energie bereitstellt, und
wobei die zweite Schaltungsanordnung (40) mit einer zweiten Gleichspannungsquelle (6) verbunden ist, welche die für einen Motorbetrieb der zweiten Wicklungsgruppe (12) benötigte Energie bereitstellt,
**dadurch gekennzeichnet, dass**
für ein von dem Lenksystem-Motor (1) bereitzustellendes Drehmoment, das einen Generatorbetrieb des Lenksystem-Motors (1) erfordert, eine Drehmomentumverteilung zwischen der ersten Wicklungsgruppe (11) und der zweiten Wicklungsgruppe (12) erfolgt, wobei die erste Wicklungsgruppe (11) abweichend von der zweiten Wicklungsgruppe (12) angesteuert wird, und
wobei in Bezug auf die erste Wicklungsgruppe (11) ein größerer negativer Stromfluss zugelassen wird, als in Bezug auf die zweite Wicklungsgruppe (12).

2. Verfahren nach Anspruch 1, **dadurch gekennzeichnet, dass** bei dem Generatorbetrieb des Lenksystem-Motors (1) die Drehmomentumverteilung zwischen der ersten Wicklungsgruppe (11) und der zweiten Wicklungsgruppe (12) weiter derart erfolgt, dass der Generatorbetrieb des Lenksystem-Motors (1) bis zu einer festgelegten Vorgabe allein durch die erste Wicklungsgruppe (11) umgesetzt wird, wobei die zweite Wicklungsgruppe (12) bei dem Generatorbetrieb des Lenksystem-Motors (1) insbesondere bis zu der festgelegten Vorgabe deaktiviert wird.

3. Verfahren nach einem der vorstehenden Ansprüche, **dadurch gekennzeichnet, dass** in Bezug auf die zweite Wicklungsgruppe (12) ein negativer Stromfluss auf einen vorgegebenen Grenzwert begrenzt wird.

4. Verfahren nach einem der vorstehenden Ansprüche, **dadurch gekennzeichnet, dass** bei dem Generatorbetrieb des Lenksystem-Motors (1) das von dem Lenksystem-Motor (1) bereitstellbare Gesamtdrehmoment auf ein durch die erste Wicklungsgruppe (11) bereitstellbares Drehmoment begrenzt wird.

5. Verfahren nach einem der vorstehenden Ansprüche, **dadurch gekennzeichnet, dass** die erste Schaltungsanordnung (30) über einen ersten DC-Bus (7) mit der ersten Gleichspannungsquelle (5) verbunden ist und die zweite Schaltungsanordnung (40) über einen zweiten DC-Bus (8) mit der zweiten Gleichspannungsquelle (6) verbunden ist, wobei die Drehmomentumverteilung zwischen der ersten Wicklungsgruppe (11) und der zweiten Wicklungsgruppe (12) erfolgt, wenn auf dem zweiten DC-Bus (8) ein negativer Stromfluss erkannt wird.

6. Verfahren nach einem der vorstehenden Ansprüche, **dadurch gekennzeichnet, dass** die erste Schaltungsanordnung (30) über einen ersten DC-Bus (7) mit der ersten Gleichspannungsquelle (5) verbunden ist und die zweite Schaltungsanordnung (40) über einen zweiten DC-Bus (8) mit der zweiten Gleichspannungsquelle (6) verbunden ist, wobei eine an dem zweiten DC-Bus (8) anliegende Spannung überwacht wird, wobei die Drehmomentumverteilung zwischen der ersten Wicklungsgruppe (11) und der zweiten Wicklungsgruppe (12) unter Berücksichtigung der an dem zweiten DC-Bus (8) anliegenden Spannung erfolgt.

7. Verfahren nach Anspruch 6, **dadurch gekennzeichnet, dass** die Drehmomentumverteilung dann erfolgt, wenn die an dem zweiten DC-Bus (8) anliegende Spannung einen vordefinierten Grenzwert überschreitet, wobei die Drehmomentumverteilung insbesondere derart erfolgt, dass die an dem zweiten DC-Bus (8) anliegende Spannung den vordefinierten Grenzwert einhält.

8. Verfahren nach Anspruch 7, **dadurch gekennzeichnet, dass** ein von der zweiten Wicklungsgruppe (12) im Generatorbetrieb des Lenksystem-Motors (1) bereitgestellter Drehmomentanteil bei einem Überschreiten der an dem zweiten DC-Bus (8) anliegenden Spannung mittels eines Pl-Reglers schrittweise reduziert wird, insbesondere bis ein Systemzustand erreicht ist, in dem ein maximal verfügbares Drehmoment in dem Generatorbetrieb des Lenksystem-Motors (1) bereitgestellt wird und der vordefinierte Grenzwert von der an dem zweiten DC-Bus (8) anliegenden Spannung eingehalten wird.

9. Verfahren nach einem der vorstehenden Ansprüche, **dadurch gekennzeichnet, dass** die erste Gleichspannungsquelle (5) in dem Generatorbetrieb des Lenksystem-Motors (1) von der ersten Wicklungsgruppe (11) erzeugte Energie aufnimmt.

10. Verfahren nach einem der vorstehenden Ansprüche, **dadurch gekennzeichnet, dass** die erste Gleichspannungsquelle (5) eine Fahrzeugbatterie ist, die keine für den Antrieb von Rädern des Kraftfahrzeugs erforderliche Energie bereitstellt, und/oder **dass** die zweite Gleichspannungsquelle (6) eine Antriebsbatterie ist, die eine für den Antrieb von Rädern des Kraftfahrzeugs erforderliche Energie bereitstellt, wobei die Antriebsbatterie über einen unidirektionalen DC-DC-Wandler (9) mit der zweiten Schaltungsanordnung (40) verbunden ist.

11. Verfahren nach einem der vorstehenden Ansprüche, **dadurch gekennzeichnet, dass** die Steuereinheiten (3, 4) des Lenksystem-Motors (1) beim Betrieb des Lenksystem-Motors (1) für die erste Wicklungsgruppe (11) und die zweite Wicklungsgruppe (12) ein verfügbares Drehmoment bestimmen, wobei eine Drehmomentverteileinheit (2) ein gefordertes Drehmoment unter Berücksichtigung des für die erste Wicklungsgruppe (11) und die zweite Wicklungsgruppe (12) verfügbaren Drehmoments auf die erste Wicklungsgruppe (11) und die zweite Wicklungsgruppe (12) verteilt.

12. Elektromechanisches Lenksystem (100) umfassend einen Lenksystem-Motor (1), der mit einer Lenkhandhabe (102) des Lenksystems (100) gekoppelt ist, und der bei einem Betrieb des Lenksystems (100) in einem Kraftfahrzeug ausgebildet ist, durch einen Motorbetrieb oder durch einen Generatorbetrieb ein Lenkverhalten der Lenkhandhabe (102) zu beeinflussen, wobei der Lenksystem-Motor (1) eine erste Wicklungsgruppe (11) mit drei ersten Phasen (u1, v1, w1) und eine zweite Wicklungsgruppe (12) mit drei zweiten Phasen (u2, v2, w2) umfasst, wobei der Lenksystem-Motor (1) bei einem Betrieb des Lenksystems (100) weiter derart ausgebildet ist, dass die erste Wicklungsgruppe (11) über einer erste Schaltungsanordnung (30) mit einer zugeordneten ersten Steuereinheit (3) des Lenksystems (100) und die zweite Wicklungsgruppe (12) über eine zweite Schaltungsanordnung (40) mit einer zugeordneten zweiten Steuereinheit (4) des Lenksystems (100) separat voneinander angesteuert werden können,
**dadurch gekennzeichnet, dass**
der Lenksystem-Motor (1) weiter ausgebildet ist, bei einem Betrieb des Lenksystems (100) in einem Kraftfahrzeug gemäß einem Verfahren nach einem der vorstehenden Ansprüche betrieben zu werden.

13. Elektromechanisches Lenksystem (100) nach Anspruch 12, **dadurch gekennzeichnet, dass** der Lenksystem-Motor (1) der Motor eines auf ein Koppelelement (107) wirkenden Lenkstellers (105) des Lenksystems (100) ist, der mechanisch mit der Lenkhandhabe (102) verbunden ist; und/oder **dass** das Lenksystem (100) ein Steer-by-Wire-Lenksystem ist, wobei der Lenksystem-Motor (1) der Motor eines Feedback-Aktuators ist, wobei der Motor mechanisch mit einer Lenkwelle (103), an der die Lenkhandhabe (102) angeordnet ist, gekoppelt ist.

14. Kraftfahrzeug umfassend ein elektromechanisches Lenksystem (100) gemäß einem der Ansprüche 12 bis 13 und wenigstens eine erste Gleichspannungsquelle (5) und eine zweite Gleichspannungsquelle (6), wobei die erste Wicklungsgruppe (11) des Lenksystem-Motors (1) des Lenksystems (100) über einen ersten DC-Bus (7) des Kraftfahrzeugs mit der ersten Gleichspannungsquelle (5) verbunden ist, und die zweite Wicklungsgruppe (12) des Lenksystem-Motors (1) des Lenksystems (100) über einen zweiten DC-Bus (8) des Kraftfahrzeugs mit der zweiten Gleichspannungsquelle (6) verbunden ist.

15. Kraftfahrzeug nach Anspruch 14, **dadurch gekennzeichnet, dass** die erste Gleichspannungsquelle (5) eine Fahrzeugbatterie ist, die keine für den Antrieb von Rädern des Kraftfahrzeugs erforderliche Energie bereitstellt, wobei die erste Gleichspannungsquelle (5) ausgebildet ist, einen von der ersten Wicklungsgruppe (11) des Lenksystem-Motors (1) generierten Strom aufzunehmen, und dass die zweite Gleichspannungsquelle (6) eine Antriebsbatterie ist, die eine für den Antrieb von Rädern des Kraftfahrzeugs erforderliche Energie bereitstellt, wobei die Antriebsbatterie über einen unidirektionalen DC-DC-Wandler (9) an den zweiten DC-Bus (8) angebunden ist.
